# EUROPÄISCHE PATENTSCHRIFT

(11) **EP 2 938 424 B1**
(45) Veröffentlichungstag und Bekanntmachung des Hinweises auf die Patenterteilung: **21.03.2018**
(21) Anmeldenummer: 14700894.0
(22) Anmeldetag: 17.01.2014
(51) Int. Cl.: B01D 53/14, B01D 53/96

(54) **VERFAHREN UND VORRICHTUNG ZUR AUFBEREITUNG EINER MIT KOHLENDIOXID VERUNREINIGTEN AMINOSÄURESALZLÖSUNG**
METHOD AND DEVICE FOR WORK-UP OF AN AMINO ACID SALT SOLUTION THAT HAS BEEN CONTAMINATED WITH CARBON DIOXIDE
PROCÉDÉ ET DISPOSITIF POUR TRAITER UNE SOLUTION DE SELS D'ACIDES AMINÉS CONTAMINÉE PAR DU DIOXYDE DE CARBONE

(30) Priorität: 05.02.2013 DE 102013201833
(43) Veröffentlichungstag der Anmeldung: 04.11.2015
(73) Patentinhaber: Siemens Aktiengesellschaft, 80333 München (DE)
(72) Erfinder: FISCHER, Björn, 40476 Düsseldorf (DE); HAUKE, Stefan, 64683 Einhausen (DE); JOH, Ralph, 63500 Seligenstadt (DE); KINZL, Markus, 63128 Dietzenbach (DE); SCHNEIDER, Rüdiger, 65817 Eppstein (DE)
(86) Internationale Anmeldenummer: PCT/EP2014/050939
(87) Internationale Veröffentlichungsnummer: WO 2014/122000

(56) Entgegenhaltungen:
- EP-A1- 2 409 755
- EP-A1- 2 514 507
- WO-A1-2008/072979
- WO-A1-2011/014955
- WO-A1-2012/030630
- US-A- 4 341 746
- US-A1- 2010 135 881

## Beschreibung

Die Erfindung betrifft ein Verfahren zum Aufbereiten einer verunreinigten Lösung, insbesondere einer verunreinigten alkalischen Aminosäuresalzlösung als Absorptionsmittel für Kohlendioxid aus einem Rauchgas einer Verbrennung fossiler Brennstoffe. Die Erfindung betrifft weiterhin eine Vorrichtung zur Aufbereitung einer verunreinigten Lösung zur Absorption von Kohlendioxid.

Bei fossil befeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid dabei mit einem Absorptionsmittel aus dem Rauchgas herausgewaschen.

In einem klassischen Absorptions-Desorptions-Prozess wird das Rauchgas in einer Absorptionskolonne mit einem selektiven Absorptionsmittel als Waschmittel in Kontakt gebracht, und dabei von dem Waschmittel absorbiert. Das nun mit Kohlendioxid beladene Absorptionsmittel wird zur Abtrennung des Kohlendioxids und Regenerierung des Absorptionsmittels in eine Desorptionskolonne geleitet. Das beladene Absorptionsmittel wird erwärmt, wobei Kohlendioxid von dem Absorptionsmittel wieder desorbiert wird und ein regeneriertes Absorptionsmittel gebildet wird. Das regenerierte Absorptionsmittel wird erneut zur Absorberkolonne geleitet, wo es wieder Kohlendioxid aus dem kohlendioxidhaltigen Abgas aufnehmen kann.

Gebräuchliche Absorptionsmittel zeigen eine gute Selektivität und eine hohe Kapazität für das abzutrennende Kohlendioxid. Besonders gut eignen sich Absorptionsmittel, die auf Aminen basieren wie z.B. Monoethanolamin. Auch in der chemischen Industrie werden in der Regel Aminlösungen als Absorptionsmittel eingesetzt. Das Absoptionsmittel umfasst ein Lösemittel, beispielsweise Wasser, in dem die Amine als waschaktive Substanz gelöst sind.

Durch den Kontakt des Absorptionsmittels mit dem Rauchgas, werden neben Kohlendioxid auch große Menge an Verunreinigungen aus dem Rauchgas und Rauchgasnebenprodukte in das Absorptionsmittel eingebracht. Auch durch die ständige thermische Belastung wird im Laufe der Zeit das Absorptionsmittel in einem Absorptions-Desorptions-Prozess geschädigt. Folglich muss das Absorptionsmittel kontinuierlich erneuert werden. Durch Ausleiten von verunreinigten und mit Degradationsprodukten versetzten Absorptionsmitteln wird auch immer eine vergleichsweise große Menge an unverbrauchtem Absorptionsmittel aus dem Absorptions-Resorptions-Prozess ausgeschleust.

Bei der Verwendung von auf Aminen basierten Absorptionsmitteln können die Amine durch Destillation aus dem ausgeleiteten Absorptionsmittel zurück gewonnen werden. Aminlösungen bilden mit den sauren Rauchgasnebenkomponenten stabile Salze. Durch die destillative Aufreinigung der Aminlösung, also durch Verdampfung der leichter flüchtigen Amine und deren anschließender Kondensation, ist eine Abtrennung der schwer siedenden Verunreinigungen und somit eine Reinigung der Aminlösung möglich.

Der merkliche Dampfdruck der Amine, der für die destillative Aufreinigung ausgenutzt wird, bedeutet jedoch auch, dass während des eigentlichen Waschprozesses (Absorptions-Resorptions-Prozess) Amine in kleinem Anteil mit dem gereinigten Rauchgas in die Umwelt ausgetragen werden, was zu unerwünschten Luftbelastungen führt. Die destillativen Reinigungsverfahren erfordern zudem einen hohen Energieaufwand.

Aminosäuresalze hingegen weisen keinen messbaren Dampfdruck auf, und werden daher auch nicht mit dem Rauchgas in die Umwelt ausgetragen. Allerdings ist aus diesem Grund auch keine destillative Aufarbeitung einer Aminosäuresalzlösung möglich.

Aus der EP 2 409 755 A1 ist ein Aufreinigungsverfahren für eine Aminosäuresalzlösung bekannt, bei dem in einem mehrstufigen Aufreinigungsprozess Aminosäuresalz zurück gewonnen, und anschließend wieder in Lösung gegeben wird. Dabei wird in einem ersten Schritt in einem ersten Reaktor unter Zugabe von Kohlendioxid zunächst kristallines Carbonat ausgefällt, das in einem dem ersten Reaktor nachgeschalteten Filtrationsprozess durch einen ersten Filter abgeschieden wird. Die von Carbonat aufgereinigte Lösung wird in einem zweiten Schritt in einem zweiten Reaktor abgekühlt, sodass kristalline Aminosäure (Aminosäuresalz) ausfällt, das in einem dem zweiten Reaktor nachgeschalteten zweiten Filtrationsprozess abgeschieden wird. Dabei wird ausgenutzt, dass das Kristallisationsverhalten von Aminosäuren stark pH-Wert abhängig ist.

Nachteilig daran ist einerseits die Komplexität des Aufreinigungsprozesses mit mehreren Reaktoren und mehreren Filterprozessen, die ein hohes Investment und eine aufwendige Prozessführung erfordern. Nachteilig ist andererseits die hohe Störanfälligkeit, da es beim Umpumpen der gesättigten Aminosäuresalzlösung vom ersten Reaktor in den zweiten Reaktor durch eine Abkühlung der Aminosäuresalzlösung in den Leitungen zu unerwünschten Ausfällungen und zur Verstopfung von Rohrleitungswegen kommen kann.

Um eine einfache und robuste Prozessführung zu gewährleisten, sind für die Filtration von Carbonat und Aminosäure verschiedene Filter zweckmäßig, da die Salze dieser beiden Komponenten aufgrund ihrer Morphologie unterschiedliche Kristallformen und Partikelgrößen bilden. Bei einer simultanen Filtration beider Komponenten in nur einem Filter ist zu erwarten, dass sich der Filter schnell zusetzt und somit den Filtrationsprozess beeinträchtigt. Begründet ist dies vor allem durch die Morphologie der Salze und den verhältnismäßig hohen Feststoffanteil der Flüssig-Fest-Phase.

Eine Aufgabe der Erfindung besteht darin, ein vereinfachtes Verfahren zum Aufbereiten einer verunreinigten alkalischen Aminosäuresalzlösung anzugeben, dass insbesondere die Nachteile aus dem Stand der Technik beseitigt und darüber hinaus großindustriell einsetzbar ist. Eine weitere Aufgabe der Erfindung besteht darin, eine vereinfachte Vorrichtung zur Aufbereitung einer verunreinigten alkalischen Aminosäuresalzlösung anzugeben, die in eine Kohlendioxid-Abscheidevorrichtung integrierbar ist.

Die auf ein Verfahren gerichtete Aufgabe der Erfindung ist erfindungsgemäß gelöst durch ein Verfahren zur Aufbereitung einer mit Kohlendioxid verunreinigten Aminosäuresalzlösung als Absorptionsmittel für Kohlendioxid aus einem Rauchgas einer Verbrennung nach Anspruch 1.

Dabei wird in einem ersten Prozesschritt in einem Reaktor Kohlendioxid in die Aminosäuresalzlösung eingeleitet und dabei gleichzeitig die Aminosäuresalzlösung abgekühlt. Dadurch fällt kristallines Carbonat und parallel kristalline Aminosäure aus. In einem zweiten, dem ersten Prozessschritt folgenden Prozessschritt werden das kristalline Carbonat und die kristalline Aminosäure in einem Filter abfiltriert. In einem dritten, dem zweiten Prozessschritt folgenden Prozessschritt wird das kristalline Carbonat und die kristalline Aminosäure in einem Lösungsmittel gelöst, und dadurch eine aufbereitete Aminosäuresalzlösung zurück gewonnen.

Die Erfindung geht dabei von der Überlegung aus, die Carbonate und die Aminosäure in einem gemeinsamen Prozessschritt auskristallisieren zu lassen, und in einem weiteren gemeinsamen Prozessschritt aus der Flüssig-Fest-Phase zu filtrieren. Dabei liegt der vorliegenden Erfindung die überraschende Erkenntnis zugrunde, dass sich entgegen der Annahme der Filter, selbst bei einer Filtration beider Salze in einem Prozessschritt, nicht derart zusetzt, dass der Filtrationsprozess nachteilig beeinträchtigt wird. Dabei hat der Filter eine Porengröße von kleiner/gleich 30 nm. Die verunreinigte alkalische Aminosäuresalzlösung wird durch eine selektive Kristallisation aufbereitet. Dabei wird die pH-Wert-Abhängigkeit des Kristallisationsverhaltens von Aminosäuren ausgenutzt. Die in Absorptions-Desorptions-Prozessen eingesetzten Aminosäuresalzlösungen zeigen in der Regel einen sehr hohen pH-Wert von zwischen ca. 10 und 13. Unter diesen Bedingungen liegt die Aminosäure als Carboxylat vor. Durch die negative Ladung des Carboxylats ist es gut in Wasser löslich. Die Erfindung sieht nun vor, die Wasserlöslichkeit der Aminosäure durch Absenken des pH-Wertes herabzusetzen. Die geringste Wasserlöslichkeit zeigen Aminosäuren am sogenannten isoelektrischen Punkt. Dort steht die Aminosäure als Carboxylat- und als Ammoniumform miteinander im Gleichgewicht (Zwitterion). Es muss aber nicht genau der isoelektrische Punkt sein, bei dem die Kristallisation mit besonders hoher Ausbeute abläuft. Der optimale pH-Wert zur Kristallisation für typische Aminosäuresalze liegt im Bereich von 6 bis 10.

Zur Absenkung des pH-Wertes ist die Verwendung von Kohlendioxid besonders vorteilhaft, da Kohlendioxid ein in dem Gesamtprozess vorhandener Stoff ist. Außerdem umfasst der Gesamtprozess einen Desorptionsprozess, sodass das Kohlendioxid in dem Desorptionsprozess wieder von der aufbereiteten Aminosäuresalzlösung entfernt werden kann, um die notwendige Alkalität der Aminosäuresalzlösung wieder zu erreichen.

Je nach Reaktionsweg, den das Aminosäuresalz bevorzugt nimmt, bildet sich bei der Begasung mit Kohlendioxid vornehmlich das Carbamat der Aminosäure oder aber Bicarbonat bzw. Carbonat. Im Falle von bicarbonatbildenden Aminsäuresalzen, ist das gebildete Bicarbonat häufig noch weniger löslich als die Aminosäuren selbst, sodass schon bei der Begasung das Alkalihydrogencarbonat mit Kohlendioxid in der Regel Kaliumhydrogencarbonat ausfällt. Durch die gleichzeitige Herabsetzung der Temperatur fällt zudem die Aminosäure in kristalliner reiner Form aus.

Durch das erfindungsgemäße Verfahren ist es möglich, Aminosäuresalz aus einer verunreinigten Aminosäuresalzlösung in nur einem Reaktionsschritt und nur einem Filtrationsschritt zurück zu gewinnen. Durch die Einsparung von weiteren Reaktoren und weiteren Filtern, sowie entsprechender Verrohrung und Prozessführung ist das vereinfachte Verfahren gegenüber dem Stand der Technik in den Investmentkosten reduziert. Auch im Betrieb ist das erfindungsgemäße Verfahren günstiger, da nur ein Reaktor temperiert bzw. gerührt werden muss. Das erfindungsgemäße Verfahren gewährleistet zudem eine hohe Unanfälligkeit für Störungen durch unerwünschte Ausfällung und Verstopfung in den Rohrleitungen.

Das Verfahren ist auch für Aminosäuresalzlösungen geeignet, deren Aminosäure bevorzugt Carbamat statt Bicarbonat bilden.

In einem vorteilhaften Optimierungsschritt des Verfahrens, wird die verunreinigte alkalische Aminosäuresalzlösung vor dem Einbringen von Kohlenstoffdioxid aufkonzentriert, sodass eine konzentrierte Aminosäuresalzlösung gebildet wird. Dadurch muss einerseits weniger Lösungsmittel gefördert und behandelt werden. Andererseits ist eine höhere Ausbeute der kristallisierten Aminosäure erzielbar. Zudem verbleibt weniger Aminosäuresalz in der verbleibenden Lösung (Mutterlauge), welches zusammen mit den abgetrennten Verunreinigungen entsorgt werden muss.

Das Aufkonzentrieren der Aminosäuresalzlösung erfolgt dabei vorteilhafterweise durch die Verwendung von Heißdampf. Dieser Heißdampf ist vorzugsweise ein Niederdruckdampf, der im Gesamtprozess eines Kohlendioxid-Abscheideprozesses verfügbar ist. Den Gesamtprozess umfasst eine Abscheidevorrichtung für Kohlendioxid für die ebenfalls Dampf für den Desorptionsprozess benötigt wird. Weiterhin umfasst der Gesamtprozess einen Fossil befeuerten Kraftwerksprozess, in dem Heißdampf zur Energiegewinnung erzeugt wird. Mit dem Heißdampf wird mit Hilfe eines geeigneten Wärmetauschers Energie in die Aminosäuresalzlösung eingebracht, wobei ein Teil des Wassers der Aminosäuresalzlösung verdampft, sodass die konzentrierte Aminosäuresalzlösung und Dampf gebildet werden. Der gebildete Dampf wird zu Kondensat kondensiert und als Lösungsmittel zum Lösen des abfiltrierten und kristallinen Carbonat und Kohlendioxid im Löseprozess verwendet.

Das Kondensat wird somit vorteilhaft wieder zum Lösen der abfiltrierten kristallinen Aminosäure bzw. des Aminosäuresalzes und somit zur Rückgewinnung einer aufbereiteten Aminosäuresalzlösung verwendet. Dadurch wird das Kondensat weitgehend im Kreislauf gehalten, wodurch eine zusätzliche Einbringung eines Lösemittels (wie beispielsweise Wasser) eingespart wird.

Das Verfahren kommt in besonders vorteilhafter Weise integriert in einen Abscheideprozess für Kohlendioxid zum Einsatz. Der Abscheideprozess umfasst dabei einen Absorptionsprozess und einen Desorptionsprozess. Dadurch ist es vorteilhaft möglich, dass das für die Einbringung in das Verfahren benötigte Kohlenstoffdioxid direkt dem Desorptionsprozess für Kohlendioxid entnommen wird. Somit wird ein im Gesamtprozess vorhandener Stoff genutzt, und auf die zusätzliche Bereitstellung eines Stoffes zur Absenkung des pH-Wertes kann verzichtet werden.

Der im Gesamtprozess vorhandene Desorptionsprozess kann dabei ebenfalls vorteilhaft dafür genutzt werden, um das in der aufbereiteten Aminosäuresalzlösung enthaltene Kohlendioxid wieder zu desorbieren, um somit die notwendige Alkalität der Aminosäuresalzlösung für die selektive Absorption von Kohlendioxid in dem Absorptionsprozess des Abscheideprozesses wieder zu erreichen.

Durch das Abfiltrieren des kristallinen Carbonats und der kristallinen Aminosäure wird eine abgereicherte Mutterlauge gebildet. Bei einer besonders vorteilhaften Weiterentwicklung des Verfahrens, wird mehr als die Hälfte dieser Mutterlauge wieder in den Reaktionsschritt zurückgeführt und zusammen mit dem Kohlendioxid in die aus der Kristallisation resultierende Suspension eingeleitet, und dadurch verdünnt. Durch die Verdünnung wird insbesondere der nachgeschaltete Filtrationsprozess weiter unterstützt. Denn durch den Anteil der in den Reaktionsprozess zurückgeführten Mutterlauge wird der Filtrationsprozess moderiert. Der Anteil an Mutterlauge wird dabei so gewählt, dass der Feststoffanteil in der Suspension soweit verdünnt wird, dass eine gleichzeitige Filtration des kristallinen Carbonats und der kristallinen Aminosäure in einem Filter problemlos erzielbar ist. Dieser Anteil, der in den Reaktionsprozess zurückgeführt wird, entspricht vorzugsweise zwischen 30 und 90% der gesamten Anfallenden Mutterlauge.

Der verbleibende Anteil an Mutterlauge wird weiter aufgeteilt. Ein erster Teil des verbleibenden Anteils wird zur Erhöhung der Ausbeute als Recycle-Strom in den Konzentrationsprozess eingeleitet. Ein zweiter Teil des verbleibenden Anteils wird verwendet, um Rückstände in einem Abfallstrom aus dem Prozess auszuleiten.

Das Verfahren ist ein Bestandteil eines Abscheideprozesses für Kohlendioxid, der in einen fossil befeuerten Kraftwerksprozess integriert ist. Vorzugsweise wird die verunreinigte Aminosäuresalzlösung dem Absorptionsmittelkreislauf des Abscheideprozesses entnommen, und die aufbereitete Aminosäuresalzlösung demselben Absorptionsmittelkreislauf wieder zugeführt. Die aufbereitete Aminosäuresalzlösung wird dabei einem Desorptionsprozess zugeführt, wobei das in der aufbereiteten Aminosäuresalzlösung enthaltene Kohlendioxid in dem Desorptionsprozess desorbiert wird.

Die auf eine Vorrichtung gerichtete Aufgabe der Erfindung zur Aufbereitung einer mit Kohlendioxid verunreinigten Aminosäuresalzlösung ist erfindungsgemäß gelöst durch die Merkmale des Anspruchs 10. Die Vorteile der Vorrichtung und der jeweiligen Weiterentwicklungen entsprechen dem erfindungsgemäßen Verfahren, das an der Vorrichtung ausführbar ist.

Die Vorrichtung umfasst einen Kristallisationsreaktor, einen Filter und einen Dissolver. In den Kristallisationsreaktor ist die verunreinigte Aminosäuresalzlösung und Kohlendioxid einleitbar, sodass durch den Kontakt der Aminosäuresalzlösung mit Kohlendioxid im Wesentlichen kristallines Carbonat ausfällbar ist. Der Kristallisationsreaktor ist zudem kühlbar, sodass durch Kühlung der Aminosäuresalzlösung weitgehend kristalline Aminosäure ausfällbar ist. Der Filter, mit einer Porengröße von kleiner/gleich 30 nm, ist über eine Leitung an den Kristallisationsreaktor angeschlossen, und dient der Abscheidung von auskristallisiertem Carbonat und auskristallisierter Aminosäure aus der zuführbaren Aminosäuresalzlösung. Der Dissolver ist an dem Filter angeschlossen. Dem Dissolver sind das auskristallisierte Carbonat und die auskristallisierte Aminosäure, und weiterhin ein Lösungsmittel zuführbar, sodass durch Lösung der Carbonate und Aminosäure mit dem Lösungsmittel eine aufbereitete Aminosäuresalzlösung gebildet ist.

Die Vorrichtung ist vorzugsweise in eine Abscheidevorrichtung für Kohlendioxid integriert, und mit dem Absorptionsmittelkreislauf der Abscheidevorrichtung verbunden. Die Abscheidevorrichtung kann dabei selbst Bestandteil eines fossil befeuerten Kraftwerks sein. Die Abscheidevorrichtung umfasst einen Speicher für Kohlendioxid. Der Kristallisationsreaktor ist mit dem Speicher über eine Leitung zur Zuführung von Kohlendioxid verbunden, und mit dem Absorptionsmittelkreislauf über eine Leitung zur Zuführung der verunreinigten Aminosäuresalzlösung. Der Dissolver ist zur Ausleitung eines aufbereiteten Lösungsmittels vorteilhafterweise mit der Desorptionseinheit der Abscheidevorrichtung für Kohlendioxid verbunden.

Bei einer weiteren vorteilhaften Ausgestaltung umfasst die Abscheidevorrichtung einen Verdampfer, der dem Kristallisationsreaktor vorgeschaltet ist, und zur Beheizung über eine Dampfleitung mit einem Dampferzeuger einer fossil befeuerten Kraftwerksanlage verbunden ist. Der Verdampfer ist über eine Leitung mit dem Dissolver verbunden, sodass dem Dissolver kondensierter Dampf als Lösemittel zuführbar ist. Somit ist der kondensierte Dampf aus dem Verdampfer weiterhin verwendbar und es muss keine zusätzliche Komponente als Lösemittel von außen eingebracht werden.

Besonders vorteilhaft ist eine Weiterentwicklung der Vorrichtung, bei welcher der Filter über eine Leitung mit dem Kristallisationsreaktor verbunden ist, sodass wenigstens ein Teil der in dem Filter gebildeten dünnen Aminosäuresalzlösung in den Kristallisationsreaktor rückführbar ist. Dadurch ist eine Verdünnung der verunreinigten Aminosäuresalzlösung erzielbar.

Im Folgenden wird die Erfindung anhand von Ausführungsbeispielen anhand von schematischen Zeichnungen näher erläutert. Darin zeigen:
- FIG 1: ein mehrstufiges Verfahren zum Aufbereiten einer verunreinigten alkalischen Aminosäuresalzlösung nach dem Stand der Technik,
- FIG 2: ein einstufiges Verfahren zum Aufbereiten einer verunreinigten alkalischen Aminosäuresalzlösung gemäß einem Ausführungsbeispiel der Erfindung,
- FIG 3: eine erste Weiterentwicklung des einstufigen Verfahrens mit einem vorgeschalteten Konzentrationsprozesses,
- FIG 4: eine zweite Weiterentwicklung des einstufigen Verfahrens mit einer Rückführung der gewonnenen dünnen Aminosäuresalzlösung in den Prozess,
- FIG 5: eine Vorrichtung zur Aufbereitung eines verunreinigten Absorptionsmittels für Kohlendioxid gemäß einem Ausführungsbeispiel der Erfindung und
- FIG 6: eine Weiterentwicklung der Vorrichtung zur Aufbereitung eines verunreinigten Absorptionsmittels für Kohlendioxid aus FIG 5

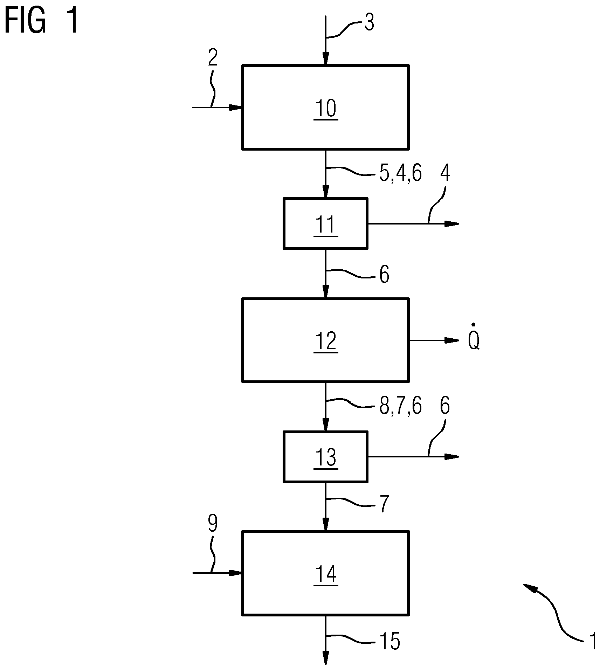

Das in FIG 1 gezeigte Aufbereitungsverfahren 1 zeigt die Aufreinigung einer verunreinigten Aminosäuresalzlösung in mehreren Reaktions- und Filterschritten nach dem Stand der Technik. Dieses Verfahren benötigt im Wesentlichen fünf aufeinander folgende Verfahrensschritte.

In dem ersten Verfahrensschritt 10 des Aufbereitungsverfahrens 1 wird Kohlendioxid 2 und, als Mutterlauge, eine verunreinigte Aminosäuresalzlösung 3 eingebracht. Durch das Inkontaktbringen der verunreinigten Aminosäuresalzlösung 3 mit dem Kohlendioxid 2 fallen vornehmlich Carbonatsalze 4 und in geringerem Maße Aminosäuren oder deren Salze aus. Den ersten Verfahrensschritt 10 verlässt eine Suspension 5 aus Carbonatsalzen und Aminosäuren bzw. deren Salzen 4 und Mutterlauge 6, die dem zweiten Verfahrensschritt 11 zugeführt wird.

In dem zweiten Verfahrensschritt 11 werden ausgefällte Feststoffe 4, beispielsweise Kaliumhydrogencarbonat von der Mutterlauge 6 abfiltriert und getrennt von der Mutterlauge 6 aus dem zweiten Verfahrensschritt 11 ausgeleitet. Die Ausfällung im ersten Verfahrensschritt 10 und die Filtration im zweiten Verfahrensschritt 11 entsprechen dabei einer Stufe.

Die Mutterlauge 6 wird dem dritten Verfahrensschritt 12 zugeführt. Im dritten Verfahrensschritt 12 wird der Mutterlauge 6 Wärme *Q̇* entzogen, wodurch die Mutterlauge 6 abkühlt und es zu einer Kristallisation von vornehmlich Aminosäure bzw. zu einer Bildung von Aminosäuresalz 7 kommt. Den dritten Verfahrensschritt 12 verlässt eine Suspension 8 aus kristalliner Aminosäure bzw. Aminosäuresalz und kleineren Anteilen an Carbonaten 7 und Mutterlauge 6, die dem vierten Verfahrensschritt 13 zugeführt werden.

In dem vierten Verfahrensschritt 13 werden die kristallinen Feststoffe 7 von der Mutterlauge 6 abfiltriert und getrennt von der Mutterlauge 6 aus dem vierten Verfahrensschritt 13 ausgeleitet. Dieser Filterkuchen, der vornehmlich aus kristalliner Aminosäure bzw. aus Aminosäuresalz 7 besteht wird nun dem fünften Verfahrensschritt 14 zugeführt. Die Ausfällung im dritten Verfahrensschritt 12 und die Filtration im vierten Verfahrensschritt 13 entsprechen dabei einer weiteren Stufe.

In dem fünften Verfahrensschritt 14 erfolgt die Rückgewinnung einer aufbereiteten Aminosäuresalzlösung 15. Dazu werden dem fünften Verfahrensschritt 14 die abfiltrierten Feststoffe aus dem zweiten und vierten Schritt 7 und ein Lösungsmittel 9 zugeführt, und die entsprechenden Salze 7 in dem Lösungsmittel gelöst. Die dabei gebildete aufbereitete Aminosäuresalzlösung 15 wird aus dem fünften Verfahrensschritt 14 ausgeleitet.

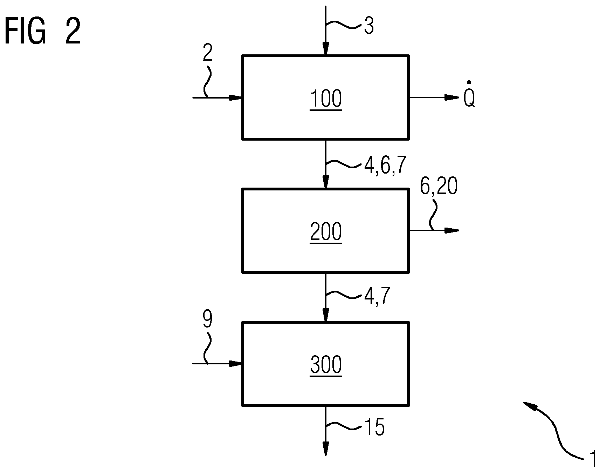

FIG 2 zeigt das Verfahren 1 zur Aufreinigung einer verunreinigten Aminosäuresalzlösung gemäß einer Ausführungsform der Erfindung. Das erfindungsgemäße Verfahren benötigt im Wesentlichen nur drei aufeinander folgende Verfahrensschritte. Dabei sind insbesondere die Verfahrensschritte eins und drei aus dem Stand der Technik in einen Reaktionsprozess 100, sowie die Verfahrensschritte zwei und vier aus dem Stand der Technik in einem Filterprozess 200, miteinander kombiniert.

In einem ersten Prozessschritt, dem Reaktionsprozess 100, wird die Aminosäuresalzlösung 3 und Kohlendioxid 2 eingeleitet. Gleichzeitig wird die Aminosäuresalzlösung 3 abgekühlt. Dadurch kommt es zur Ausfällung (Auskristallisieren) von kristallinem Carbonat 4 und kristalliner Aminosäure 7. Dadurch wird eine Suspension gebildet, aus kristallinem Carbonat 4, kristalliner Aminosäure 7 und Mutterlauge 6.

In einem dem Reaktionsprozess 100 folgenden zweiten Prozessschritt, dem Filtrationsprozess 200, werden das kristalline Carbonat 4 und die kristalline Aminosäure 7 von der Mutterlauge 6 abfiltriert. Die Mutterlauge 6 wird aus dem Prozess ausgeleitet.

In einem dem Filtrationsprozess 200 folgenden dritten Prozessschritt, dem Löseprozess 300, wird das kristalline Carbonat 4 und die kristalline Aminosäure 7 in einem Lösungsmittel 9 wieder gelöst, und dadurch eine aufbereitete Aminosäuresalzlösung 15 zurück gewonnen. Das Verfahren ist einstufig, da nur ein Reaktionsprozess 100 und ein Filtrationsprozess 200 vorhanden sind.

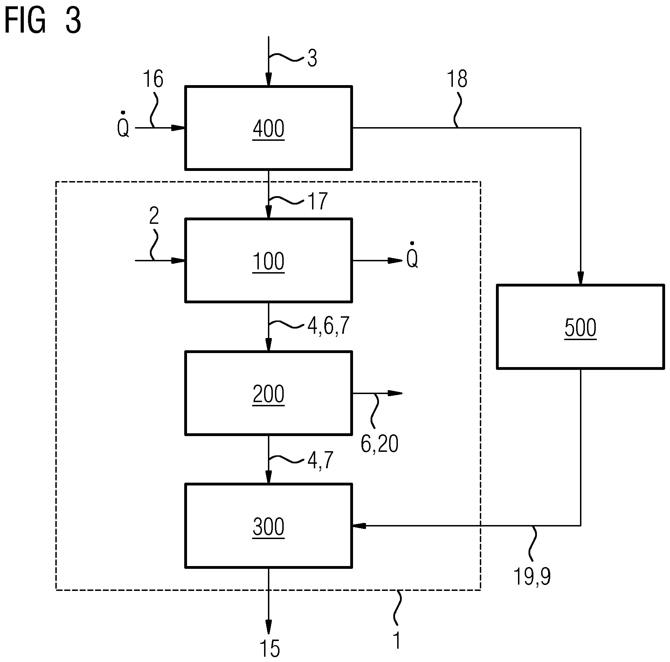

FIG 3 zeigt eine vorteilhafte Weiterbildung des in FIG 2 dargestellten Aufbereitungsverfahrens 1. Dem Aufbereitungsverfahren 1 ist dazu ein Konzentrationsprozess 400 vorgeschaltet.

Dem Konzentrationsprozess 400 wird die verunreinigte Aminosäuresalzlösung 3 und Wärmeenergie *Q̇* zugeführt, wodurch die verunreinigte Aminosäuresalzlösung 3 aufkonzentriert wird. Die zugeführte Wärmeenergie *Q̇* kann mit Heißdampf übertragen werden, der durch einen Dampferzeugungsprozess eines Kraftwerksprozesses bereit gestellt wird. Durch das Aufkonzentrieren der verunreinigten Aminosäuresalzlösung 3 wird Lösungsmittel verdampft, wobei ein Dampf 18 gebildet wird. Der Dampf 18 wird in einem Kondensierungsprozess 500 zu Kondensat 19 kondensiert.

Durch das Verdampfen von Lösungsmittel wird die verbleibende Mutterlauge zu einer aufkonzentrierten Aminosäuresalzlösung 17 konzentriert. Die aufkonzentrierte Aminosäuresalzlösung 17 wird dem nachgeschalteten Aufbereitungsverfahren 1 zugeführt. Das Kondensat 19 aus dem Kondensierungsprozess 500 wird dem Löseprozess 300 zugeführt. Das Kondensat 19 dient dabei als Lösungsmittel 9 zum Lösen des Carbonatsalzes 4 und des Aminosäuresalzes 7 und somit zum Erzielen einer aufbereiteten Aminosäuresalzlösung 15.

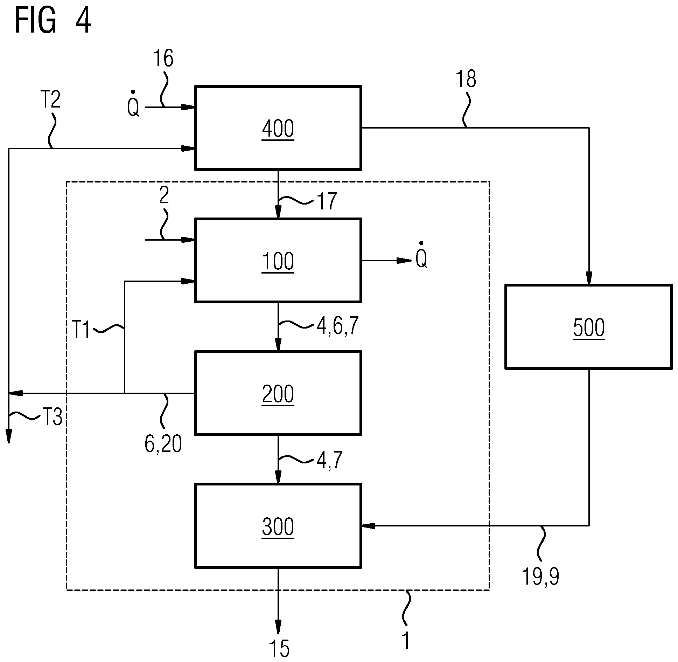

FIG 4 zeigt eine weitere, besonders vorteilhafte Weiterentwicklung des erfindungsgemäßen Aufbereitungsverfahrens 1. Dargestellt sind im Wesentlichen der Reaktionsprozess 100, der Filterprozess 200, der Löseprozess 300, und der dem Reaktionsprozess 100 vorgeschaltete Konzentrationsprozess 400 mit dem angeschlossenen Kondensierungsprozess 500.

Die Mutterlauge 6, die den Filtrationsprozess 200 verlässt, ist eine abgereicherte Aminosäuresalzlösung 20, da sie nur noch geringe Mengen an gelöstem Aminosäuresalz enthält. Diese dünne Aminosäuresalzlösung 20 wird in drei Teilströme aufgeteilt.

Ein erster Teilstrom T1, der mehr als die Hälfte der abgereicherten Aminosäuresalzlösung ausmacht, wird zurück in den Reaktionsprozess 100 geleitet und verdünnt die Supension 17. Durch die Verdünnung wird erzielt, dass der Feststoffanteil der zu filternden Suspension nicht zu groß wird, sodass eine Filtration erfolgen kann, ohne dass sich der Filter im Filterprozess 200 zusetzt. Erfolgreich lässt sich der Filterprozess 200 betreiben, wenn zwischen 30 und 90% der abgereicherten Aminosäuresalzlösung 20 zum Verdünnen der Suspension verwendet wird.

Ein zweiter Teilstrom T2 wird dem Konzentrationsprozess 400 zugeführt. Durch die Rückführung der dünnen Aminosäuresalzlösung 20 in den Konzentrationsprozess 400 wird kann die Ausbeute des Aufbereitungsverfahrens 1 weiter gesteigert, und somit die Verluste an Aminosäuresalz 7 verringert werden. Der Teilstrom T2 wird in Abhängigkeit vom ersten Teilstrom T1 eingestellt. Vorzugsweise entspricht der zweite Teilstrom T2 einem Anteil von 5 bis 60% des Gesamtstroms an abgereicherter Aminosäuresalzlösung 20.

Ein dritter Teilstrom T3 bildet einen Abfallstrom und wird aus dem Prozess ausgeleitet und entsorgt. Der dritte Teilstrom T3 wird dabei in Abhängigkeit der Teilströme T1 und T2 betrieben und vorzugsweise auf zwischen 5 und 20% eingestellt.

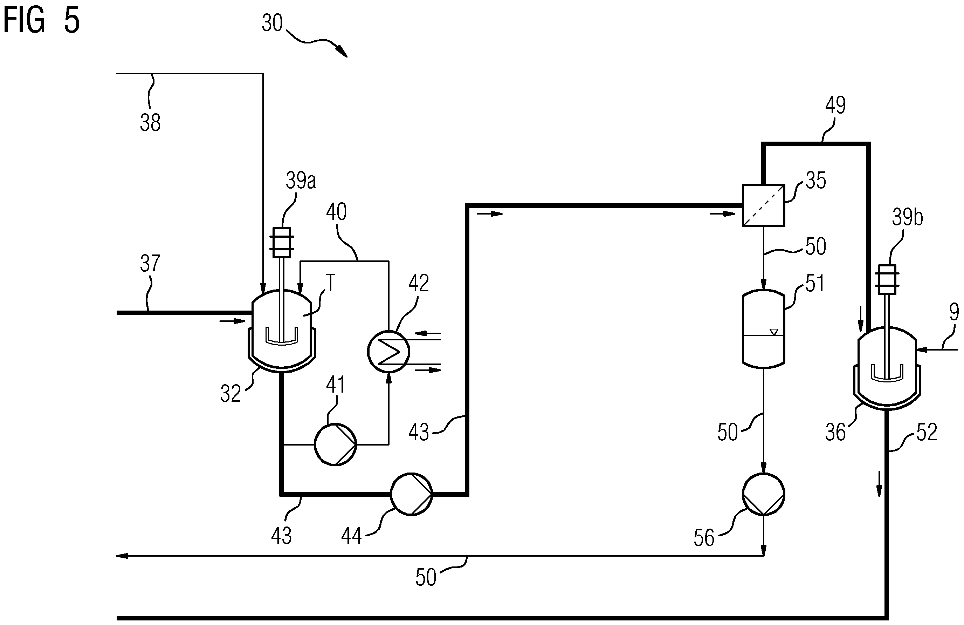

FIG 5 zeigt eine Ausführungsform der erfindungsgemäßen Vorrichtung 30 zur Aufbereitung eines verunreinigten Absorptionsmittels für Kohlendioxid. Die wesentlichen Komponenten der FIG 5 sind ein Reaktor 32, ein Filter 35 und ein Dissolver 36.

Der Reaktor 32 weist eine Zuführleitung 37 für ein verunreinigtes Absorptionsmittel und eine Zuführleitung für Kohlendioxid 38 auf. Die Zuführleitung 37 ist an einer Kohlendioxid-Abscheidevorrichtung (CO2-Capture Plant) für die Zuleitung eines verunreinigten Absorptionsmittels angeschlossen. Die Kohlendioxid-Abscheidevorrichtung ist hier nicht dargestellt. Die Zuführleitung 38 für Kohlendioxid ist ebenfalls an der Kohlendioxid-Abscheidevorrichtung angeschlossen und dient der Zuführung von bereits aus einem Rauchgas abgetrenntem Kohlendioxid.

Der Reaktor 32 umfasst ein Rührwerk 39a und ist in eine Kühlschleife 40 geschaltet, in welche eine Pumpe 41 und einen Kühler 42 geschaltet sind. Durch den Kühler 42 ist Wärmeenergie aus dem ersten Reaktor 32 abführbar, wodurch eine Temperatur T in dem Reaktor 32 einstellbar ist. Denkbar sind auch andere Konzepte zur Einstellung der Temperatur T. Zur Ausleitung einer Suspension weist der Reaktor 32 eine Leitung 43 auf. Die Leitung 43 verbindet den Reaktor 32 mit dem Filter 35. In die Leitung 43 ist eine Pumpe 44 zur Förderung der Suspension geschaltet.

Die Carbonate und Aminosäure sind im Reaktor 32 bereits weitgehend vollständig ausgefällt. Erfolgt eine weite Abkühlung der Suspension in der Leitung 43, ist somit mit keiner Zunahme an Feststoffanteil zu rechnen, und in Folge dessen eine Verstopfung der Leitung 43 vermieden.

Der Filter 35 ist für die Abscheidung von kristallinen Feststoffkomponenten, vorzugsweise Kaliumhydrogencarbonat und Aminosäuresalz, von einer flüssigen Komponente ausgelegt. Der Filter 35 weist eine Auslassleitung 49 für den Transport einer abfiltrierten Feststoffkomponente auf, und eine Auslassleitung 50 für die Ausleitung einer dünnen Aminosäuresalzlösung. In die Auslassleitung 50 sind ein Sammelbehälter 51 und eine Pumpe 56 geschaltet. Durch die Auslassleitung 50 wird eine abgereicherte Aminosäuresalzlösung aus dem Prozess ausgeleitet.

Der Dissolver 36 ist mit einem Rührer 39b ausgerüstet, z.B. einem Scheibenrührer, der die Funktion hat, kristalline Agglomerate wieder in Lösung zu bringen. Dem Dissolver 36 kann dazu noch ein Lösungsmittel, beispielsweise Wasser, zugeführt werden. An den Dissolver 36 ist eine Rückführleitung 52 angeschlossen, die zur Ausleitung eines aufbereiteten Absorptionsmittels mit einer Abscheidevorrichtung für Kohlendioxid (CO2-Capture Plant) verbunden ist.

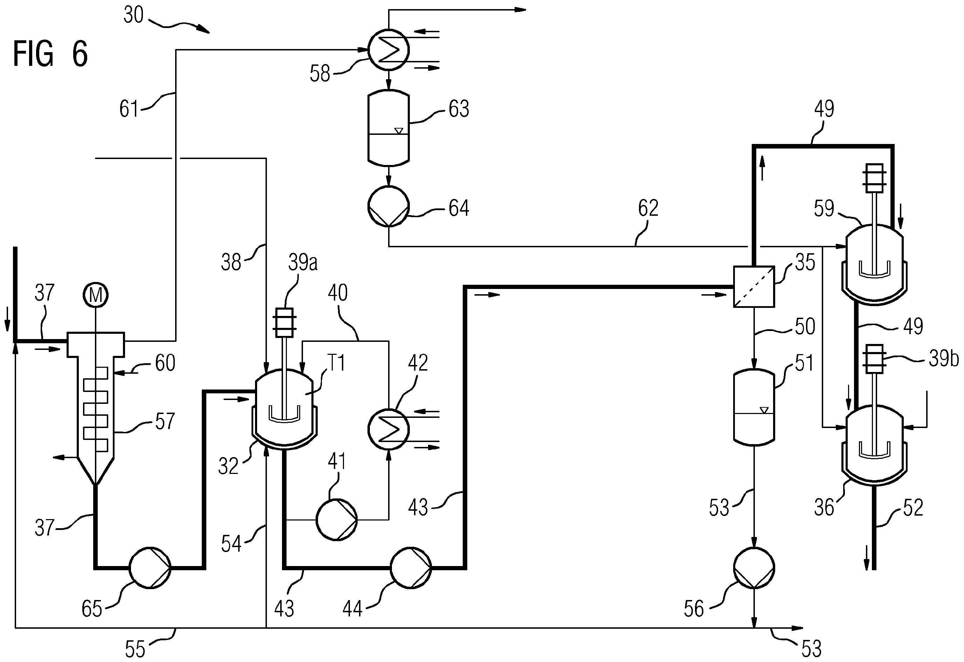

FIG 6 zeigt eine Weiterbildung der in FIG 5 gezeigten Vorrichtung 30. Im Unterschied zu FIG 5 umfasst das Ausführungsbeispiel der FIG 6 zusätzlich im Wesentlichen einen Verdampfer 57, einen Kondensator 58 und einen Feststoffsammler 59.

Der Verdampfer 57 ist als Filmverdampfer ausgelegt, und in die Zuführleitung 37 für ein verunreinigtes Absorptionsmittel geschaltet. An den Verdampfer 57 ist zudem eine Dampfleitung 60 angeschlossen, welche den Verdampfer 57 mit einem Dampferzeuger einer fossil befeuerten Kraftwerksanlage verbindet. Durch die Verdampfung wird eine aufkonzentrierte Aminosäuresalzlösung gebildet, die aus dem Verdampfer 57 über die Leitung 37 ausleitbar ist. In die Leitung 37, zwischen dem Verdampfer 57 und dem Reaktor 32 ist eine Pumpe 65 geschaltet, durch welche die aufkonzentrierte Aminosäuresalzlösung in den Reaktor förderbar ist.

Über eine Leitung 61 ist aus dem Verdampfer 57 Dampf ausleitbar. Die Leitung 61 verbindet den Verdampfer 57 mit dem Kondensator 58, in dem der Dampf kondensierbar ist. An den Kondensator 58 ist eine Kondensatleitung 62 angeschlossen, die den Kondensator 58 mit dem Feststoffsammler 59 und dem Dissolver 36 verbindet. In die Kondensatleitung 62 sind ein Sammelbehälter 63 zur Speicherung von Kondensat und eine Pumpe 64 zur Förderung von Kondensat geschaltet.

Zur Ausleitung eines abfiltrierten Feststoffes ist in dem Ausführungsbeispiel der FIG 6 der Filter 35 über eine Auslassleitung 49 mit dem Feststoffsammler 59 verbunden. In dem Feststoffsammler 59 werden die abfiltrierten Feststoffkomponenten gespeichert und dosiert an den Dissolver 36 über eine Auslassleitung 49 abgegeben. Durch die Zwischenspeicherung und die dosierte Abgabe kann der Dissolver 36 unter konstanten Bedingungen betrieben werden.

Zur Ausleitung einer durch die Filtration gebildeten Mutterlauge ist an den Filter 35 die Auslassleitung 50 angeschlossen. Im Ausführungsbeispiel der FIG 6 zeigt die Auslassleitung 50 in drei Teilleitungen auf. Die erste Teilstromleitung 54 verbindet den Filter 35 mit dem Reaktor 32 und dient der Rückführung eines Teilstroms von Mutterlauge in den Reaktor 32. Die zweite Teilstromleitung 55 verbindet den Filter 32 mit dem Verdampfer 57 und dient der Rückführung eines Teilstroms von Mutterlauge in den Verdampfer 57. Die dritte Teilstromleitung 53 dient der Ausleitung einer verbliebenen flüssigen Komponente.

Die erste Teilstromleitung 54 ist dabei dementsprechend groß ausgelegt, dass mehr als die Hälfte der durch die Auslassleitung 50 auszuleitenden Mutterlauge durch die erste Teilstromleitung 54 führbar ist. Die zweite Teilstromleitung 55 und die dritte Teilstromleitung 53 sind im Verhältnis zur ersten Teilstromleitung mit einem kleineren Strömungsdurchmesser ausgelegt. In die jeweiligen Teilstromleitungen 53, 54 und 55 können Ventile geschaltet sein, durch die sich der Durchfluss und die Aufteilung des Flusses auf die Teilleitungen untereinander einstellbar sind.

## Patentansprüche

1. Verfahren (1) zur Aufbereitung einer mit Kohlendioxid (2) verunreinigten Aminosäuresalzlösung (3) als Absorptionsmittel für Kohlendioxid aus einem Rauchgas einer Verbrennung, umfassend die folgenden, einander nachfolgenden Prozessschritte:
- In einem Reaktionsprozess (100), Einleiten von Kohlendioxid (2) in die Aminosäuresalzlösung (3) und Abkühlen der Aminosäuresalzlösung (3), und dadurch Ausfällen von kristallinem Carbonat (4) und kristalliner Aminosäure (7),
- in einem Filtrationsprozess (200), Abfiltrieren des kristallinen Carbonats (4) und der kristallinen Aminosäure (7) mit einem Filter (35), der eine Porengröße von kleiner/gleich 30 nm hat,
- in einem Löseprozess (300), Lösen des kristallinen Carbonats (4) und der kristallinen Aminosäure (7) in einem Lösungsmittel (9) und dadurch Rückgewinnen einer aufbereiteten Aminosäuresalzlösung (15).

2. Verfahren (1) nach Anspruch 1, wobei dem Reaktionsprozess (100) ein Konzentrationsprozess (400) vorgeschaltet wird, in dem die verunreinigte Aminosäuresalzlösung (3) aufkonzentriert wird, sodass eine konzentrierte Aminosäuresalzlösung (3) gebildet wird.

3. Verfahren (1) nach Anspruch 2, bei dem im Konzentrationsprozess (400) zum Aufkonzentrieren mit Hilfe von Heißdampf (16) Wärme in die Aminosäuresalzlösung (3) eingebracht wird, wobei ein Teil des Lösungsmittels der verunreinigten Aminosäuresalzlösung (3) verdampft wird, sodass eine aufkonzentrierte Aminosäuresalzlösung (17) und Dampf (18) gebildet werden, und wobei der Dampf (18) zu Kondensat (19) kondensiert wird und als Lösungsmittel (9) zum Lösen des abfiltrierten und kristallinen Carbonats (4) und der kristallinen Aminosäure (7) im Löseprozess (300) verwendet wird.

4. Verfahren (1) nach einem der Ansprüche 1 bis 3, bei dem das einzuleitende Kohlendioxid (2) einem Desorptionsprozess einer Abscheidevorrichtung für Kohlendioxid entnommen wird.

5. Verfahren (1) nach einem der Ansprüche 1 bis 4, wobei im Filtrationsprozess (200) durch die Kristallisation von Carbonat (4) und der Aminosäure (7) eine abgereicherte Aminosäuresalzlösung (20) als Mutterlauge (6) gebildet wird, und wobei mehr als die Hälfte der Mutterlauge (20) wieder in den Reaktionsprozess (100) in die Suspension (17) zugeführt wird, sodass die Suspension (17) verdünnt wird.

6. Verfahren (1) nach Anspruch 5, bei dem die verbleibende Hälfte an dünnem Absorptionsmittel (20) aufgeteilt wird, und ein erster Teil in den Konzentrationsprozess (400) überführt wird, und ein zweiter Teil zum Ausleiten von Rückständen in einen Abfallstrom verwendet wird.

7. Verfahren (1) nach einem der Ansprüche 1 bis 6, bei dem die verunreinigte Aminosäuresalzlösung (3) einem Absorptionsmittelkreislauf einer Abscheidevorrichtung für Kohlendioxid entnommen wird, und die aufbereitete Aminosäuresalzlösung (15) dem Absorptionsmittelkreislauf zugeführt wird.

8. Verfahren (1) nach einem der Ansprüche 1 bis 7, bei dem die aufbereitete Aminosäuresalzlösung (15) einem Desorptionsprozess eines Abscheideprozesses für Kohlendioxid zugeführt wird, wobei das in der aufbereiteten Aminosäuresalzlösung (15) enthaltene Kohlendioxid (2) in dem Desorptionsprozess desorbiert wird.

9. Verfahren (1) nach einem der Ansprüche 1 oder 8, als Bestandteil eines Abscheideprozesses für Kohlendioxid, der in einen fossil befeuerten Kraftwerksprozess integriert ist.

10. Vorrichtung (30) zur Aufbereitung einer mit Kohlendioxid verunreinigten Aminosäuresalzlösung als Absorptionsmittel für Kohlendioxid aus einem Rauchgas einer Verbrennung, umfassend folgende Bauteile:
- einen Kristallisationsreaktor (32), in den die verunreinigte Aminosäuresalzlösung (37) und Kohlendioxid (38) einleitbar ist, sodass durch den Kontakt der Aminosäuresalzlösung (37) mit Kohlendioxid (38) im wesentlichen kristallines Carbonat ausfällt, und dass der Kristallisationsreaktor (32) kühlbar ist, sodass durch Kühlung der Aminosäuresalzlösung (37) weitgehend kristalline Aminosäure ausfällt,
- einen Filter (35), der über eine Leitung (43) an den Kristallisationsreaktor (32) angeschlossenen ist, und dem zur Abscheidung von auskristallisiertem Carbonat und auskristallisierter Aminosäure Aminosäuresalzlösung zuführbar ist, und
- einen Dissolver (36), der über eine Leitung (49) an den Filter (35) angeschlossen ist, und dem das auskristallisierte Carbonat und die auskristallisierte Aminosäure zuführbar ist, und dem weiterhin ein Lösungsmittel (9) zuführbar ist, sodass durch Lösung der Carbonate und Aminosäure mit dem Lösungsmittel (9) eine aufbereitete Aminosäuresalzlösung (15) gebildet wird,
**dadurch gekennzeichnet, dass** der Filter (35) eine Porengröße von kleiner/gleich 30 nm hat.

11. Vorrichtung (30) nach Anspruch 10, weiterhin umfassend eine Abscheidevorrichtung für Kohlendioxid, wobei die Abscheidevorrichtung einen Absorptionsmittelkreislauf und einen Speicher für Kohlendioxid umfasst, und wobei der Kristallisationsreaktor (32) mit dem Speicher über eine Leitung (38) zur Zuführung von Kohlendioxid verbunden ist, und mit dem Absorptionsmittelkreislauf über eine Leitung (37) zur Zuführung der verunreinigten Aminosäuresalzlösung verbunden ist.

12. Vorrichtung (30) nach einem der Ansprüche 10 oder 11,
weiterhin umfassend einen Verdampfer (57), der dem Kristallisationsreaktor (32) vorgeschaltet ist, und zur Beheizung über eine Dampfleitung (60) mit einem Dampferzeuger einer fossil befeuerten Kraftwerksanlage verbindbar ist.

13. Vorrichtung (30) nach Anspruch 12,
**dadurch gekennzeichnet, dass** der Verdampfer (57) über eine Leitung (61, 62) mit dem Dissolver (36) verbunden ist, sodass dem Dissolver (36) kondensierter Dampf als Lösemittel zuführbar ist.

14. Vorrichtung (30) nach einem der Ansprüche 10 bis 13,
**dadurch gekennzeichnet, dass** der Filter (35) über eine Leitung (50, 54) mit dem Kristallisationsreaktor (32) verbunden ist, sodass wenigstens ein Teil der in dem Filter gebildeten dünnen Aminosäuresalzlösung in den Kristallisationsreaktor (32) rückführbar ist, sodass eine Verdünnung der verunreinigte Aminosäuresalzlösung erzielbar ist.

15. Vorrichtung (30) nach einem der Ansprüche 10 bis 14,
**dadurch gekennzeichnet, dass** der Kristallisationsreaktor (32) mit einem Speicher für Kohlendioxid verbindbar ist, der Teil einer in die fossil befeuerte Kraftwerksanlage integrierten Abscheidevorrichtung für Kohlendioxid ist, sodass dem Kristallisationsreaktor Kohlendioxid zuführbar ist.

16. Vorrichtung (30) nach einem der Ansprüche 10 bis 15,
**dadurch gekennzeichnet, dass** der Dissolver (36) zur Ausleitung eines aufbereiteten Lösungsmittels über eine Rückführleitung (52) mit einer Desorptionseinheit der Abscheidevorrichtung für Kohlendioxid verbindbar ist.

## Claims

1. Method (1) for treatment of an amino acid salt solution (3) that is contaminated with carbon dioxide (2) and is an absorbent for carbon dioxide from a flue gas of a combustion, comprising the following sequential process steps:
- in a reaction process (100), introducing carbon dioxide (2) into the amino acid salt solution (3) and cooling the amino acid salt solution (3), and thereby precipitating crystalline carbonate (4) and crystalline amino acid (7),
- in a filtration process (200), filtering off the crystalline carbonate (4) and the crystalline amino acid (7) with a filter (35) which has a pore size of less than/equal to 30 nm,
- in a dissolution process (300), dissolving the crystalline carbonate (4) and the crystalline amino acid (7) in a solvent (9) and thereby recovering a treated amino acid salt solution (15).

2. Method (1) according to Claim 1, with the reaction process (100) having an upstream concentration process (400) in which the contaminated amino acid salt solution (3) is concentrated in such a manner that a concentrated amino acid salt solution (3) is formed.

3. Method (1) according to Claim 2, wherein heat is introduced into the amino acid salt solution (3) by superheated steam (16) for concentration in the concentration process (400), with some of the solvent of the contaminated amino acid salt solution (3) being evaporated, in such a manner that a concentrated amino acid salt solution (17) and steam (18) are formed, and with the steam (18) being condensed to form condensate (19) and used as solvent (9) for dissolving the filtered-off and crystalline carbonate (4) and the crystalline amino acid (7) in the dissolution process (300).

4. Method (1) according to any one of Claims 1 to 3, wherein the carbon dioxide (2) that is to be introduced is withdrawn from a desorption process of a separation device for carbon dioxide.

5. Method (1) according to any one of Claims 1 to 4, with a depleted amino acid salt solution (20) being formed as mother liquor (6) in the filtration process (200) by the crystallization of carbonate (4) and the amino acid (7), and with more than half of the mother liquor (20) being fed back to the reaction process (100) into the suspension (17) in such a manner that the suspension (17) is diluted.

6. Method (1) according to Claim 5, wherein the remaining half of lean absorbent (20) is divided and a first part is transferred to the concentration process (400) and a second part is used for discharging residues to a waste stream.

7. Method (1) according to any one of Claims 1 to 6, wherein the contaminated amino acid salt solution (3) is withdrawn from an absorbent circuit of a carbon dioxide separation device, and the treated amino acid salt solution (15) is fed to the absorbent circuit.

8. Method (1) according to any one of Claims 1 to 7, wherein the treated amino acid salt solution (15) is fed to a desorption process of a carbon dioxide separation process, with the carbon dioxide (2) present in the treated amino acid salt solution (15) being desorbed in the desorption process.

9. Method (1) according to either of Claims 1 and 8 as a component of a carbon dioxide separation process which is integrated into a fossil-fuelled power plant process.

10. Device (30) for treatment of an amino acid salt solution that is contaminated with carbon dioxide and is an absorbent for carbon dioxide from a flue gas of a combustion, comprising the following components:
- a crystallization reactor (32) into which the contaminated amino acid salt solution (37) and carbon dioxide (38) can be introduced, in such a manner that owing to the contact between the amino acid salt solution (37) and carbon dioxide (38) substantially crystalline carbonate precipitates out, and that the crystallization reactor (32) is coolable, in such a manner that by cooling the amino acid salt solution (37) substantially crystalline amino acid precipitates out,
- a filter (35) which is connected via a line (43) to the crystallization reactor (32), and to which amino acid salt solution can be fed for separating crystallized carbonate and crystallized amino acid, and
- a dissolver (36) which is connected via a line (49) to the filter (35), and to which the crystallized carbonate and the crystallized amino acid can be fed, and to which, in addition, a solvent (9) can be fed, in such a manner that by dissolving the carbonates and amino acid with the solvent (9) a treated amino acid salt solution (15) is formed,
**characterized in that** the filter (35) has a pore size of less than/equal to 30 nm.

11. Device (30) according to Claim 10, additionally comprising a carbon dioxide separation device, with the separation device comprising an absorbent circuit and a store for carbon dioxide, and the crystallization reactor (32) being connected to the store via a line (38) for feeding carbon dioxide, and being connected to the absorbent circuit via a line (37) for feeding the contaminated amino acid salt solution.

12. Device (30) according to either of Claims 10 and 11, additionally comprising an evaporator (57) which is upstream of the crystallization reactor (32) and can be connected for heating via a steam line (60) to a steam generator of a fossil-fuelled power plant.

13. Device (30) according to Claim 12, **characterized in that** the evaporator (57) is connected via a line (61, 62) to the dissolver (36), in such a manner that condensed steam can be fed as solvent to the dissolver (36).

14. Device (30) according to any one of Claims 10 to 13, **characterized in that** the filter (35) is connected via a line (50, 54) to the crystallization reactor (32), in such a manner that at least one part of the lean amino acid salt solution that is formed in the filter can be returned to the crystallization reactor (32), in such a manner that the contaminated amino acid salt solution can be diluted.

15. Device (30) according to any one of Claims 10 to 14, **characterized in that** the crystallization reactor (32) is connected to a store for carbon dioxide which is part of a carbon dioxide separation device integrated into the fossil-fuelled power plant, in such a manner that carbon dioxide can be fed to the crystallization reactor.

16. Device (30) according to any one of Claims 10 to 15, **characterized in that** the dissolver (36), for discharge of a treated solvent, can be connected via a return line (52) to a desorption unit of the carbon dioxide separation device.

## Revendications

1. Procédé (1) de traitement d'une solution (3) de sel d'acide aminé polluée par du dioxyde de carbone (2), comme agent d'absorption du dioxyde de carbone dans un gaz de fumée d'une combustion, comprenant les stades de procédé successifs suivants :
- dans un processus (100) de réaction, on envoie du dioxyde de carbone (2) dans la solution (3) de sel d'acide aminé et on refroidit la solution (3) de sel d'acide aminé en précipitant ainsi des cristaux de carbonate (4) et des cristaux d'acide aminé (7),
- dans un processus (200) de filtration, on sépare par filtration les cristaux de carbonate (4) et les cristaux d'acide aminé (7) par un filtre (35), qui a une dimension de pore inférieure/égale à 30 nm,
- dans un processus (300) de dissolution, on dissout les cristaux de carbonate (4) et les cristaux d'acide aminé (7) dans un solvant (9) et on recueille ainsi une solution (15) traitée de sel d'acide aminé.

2. Procédé (1) suivant la revendication 1, dans lequel on effectue, avant le processus (100) de réaction, un processus (400) de concentration, dans lequel on concentre la solution (3) polluée de sel d'acide aminé, de manière à former une solution (3) concentrée de sel d'acide aminé.

3. Procédé (1) suivant la revendication 2, dans lequel, dans le processus (400) de concentration, on introduit, pour la concentration, à l'aide de vapeur (16) surchauffée, de la chaleur dans la solution (3) de sel d'acide aminé, une partie du solvant étant évaporée de la solution (3) polluée de sel d'acide aminé, de manière à former une solution (17) concentrée de sel d'acide aminé et de la vapeur (18), la vapeur (18) étant condensée en un condensat (19) et étant utilisée, comme dans le processus (300) de dissolution, comme solvant (9) pour dissoudre les cristaux de carbonate (4) et les cristaux d'acide aminé (7) séparés par filtration.

4. Procédé (1) suivant l'une des revendications 1 à 3, dans lequel on prélève le dioxyde de carbone (2) introduit d'un processus de désorption d'une installation de séparation du dioxyde de carbone.

5. Procédé (1) suivant l'une des revendications 1 à 4, dans lequel, dans le processus (200) de filtration, on forme, par la cristallisation du carbonate (4) et de l'acide aminé (7), une solution (20) appauvrie de sel d'acide aminé, comme liqueur (6) mère, et dans lequel on ajoute, dans la suspension (17) à nouveau dans le processus (100) de réaction, plus de la moitié de la liqueur (20) mère, de manière à diluer la suspension (17).

6. Procédé (1) suivant la revendication 5, dans lequel on divise la moitié restante d'agent (20) absorbant dilué et on en transfère une première partie au processus (400) de concentration et on en utilise une deuxième partie pour faire sortir des résidus en un courant de déchets.

7. Procédé (1) suivant l'une des revendications 1 à 6, dans lequel on prélève la solution (3) polluée de sel d'acide aminé d'un circuit d'agent absorbant d'une installation de séparation du dioxyde de carbone et on envoie la solution (15) traitée de sel d'acide aminé au circuit d'agent absorbant.

8. Procédé (1) suivant l'une des revendications 1 à 7, dans lequel on envoie la solution (15) traitée de sel d'acide aminé à un processus de désorption d'un processus de séparation de dioxyde de carbone, le dioxyde de carbone (2) contenu dans la solution (15) traitée de sel d'acide aminé étant désorbé dans le processus de désorption.

9. Procédé (1) suivant l'une des revendications 1 ou 8, comme partie constitutive d'un processus de séparation du dioxyde de carbone, qui est intégré à un processus de centrale électrique à combustible fossile.

10. Installation (30) de traitement d'une solution de sel d'acide aminé polluée par du dioxyde de carbone, comme agent absorbant du dioxyde de carbone d'un gaz de fumée d'une combustion, comprenant les parties constitutives suivantes :
- un réacteur (32) de cristallisation, dans lequel la solution (37) polluée de sel d'acide aminé et du dioxyde de carbone peuvent être envoyés, de manière à précipiter, par le contact de la solution (37) de sel d'acide aminé et du dioxyde de carbone (38), du carbonate sensiblement cristallin, et en ce que le réacteur (32) de cristallisation peut être refroidi, de manière à précipiter, par refroidissement de la solution (37) de sel d'acide aminé, de l'acide aminé dans une grande mesure cristallin;
- un filtre (35), qui est raccordé par un conduit (43) au réacteur (32) de cristallisation, et auquel la solution de sel d'acide aminé peut être envoyée pour séparer des cristaux de carbonate et des cristaux d'acide aminé et
- un dissolveur (36), qui est raccordé au filtre (35) par un conduit (49) et auquel le carbonate séparé à l'état cristallin et l'acide aminé séparé à l'état cristallin peuvent être envoyés et auquel peut être envoyé en outre un solvant (9), de manière à former, par dissolution du carbonate et de l'acide aminé par le solvant (9), une solution (15) traitée de sel d'acide aminé,
**caractérisée en ce que** le filtre (35) a une dimension de pore inférieure/égale à 30 nm.

11. Installation (30) suivant la revendication 10, comprenant en outre une installation de séparation du dioxyde de carbone, l'installation de séparation comprenant un circuit d'agent absorbant et un accumulateur de dioxyde de carbone, le réacteur (32) de cristallisation communiquant, pour l'apport de dioxyde de carbone, avec l'accumulateur par un conduit (38) pour l'envoi du dioxyde de carbone, et communiquant avec le circuit d'agent absorbant par un conduit (37) pour l'envoi de la solution polluée de sel d'acide aminé.

12. Installation (30) suivant l'une des revendications 10 ou 11, comprenant en outre un évaporateur (57) monté en amont du réacteur (32) de cristallisation et pouvant, pour être chauffé, communiquer par un conduit (60) pour de la vapeur avec un générateur de vapeur d'une centrale électrique à combustible fossile.

13. Installation (30) suivant la revendication 12, **caractérisée en ce que** l'évaporateur (57) communique avec un dissolveur (36) par un conduit (61, 62), de manière à pouvoir envoyer, au dissolveur (36), comme solvant, de la vapeur condensée.

14. Installation (30) suivant l'une des revendications 10 à 13, **caractérisée en ce que** le filtre (35) communique avec le réacteur (32) de cristallisation par un conduit (50, 54), de manière à pouvoir recycler, dans le réacteur (32) de cristallisation, une partie de la solution diluée de sels d'acide aminé formée dans le filtre, afin de pouvoir obtenir une dilution de la solution polluée de sel d'acide aminé.

15. Installation (30) suivant l'une des revendications 10 à 14, **caractérisée en ce que** le réacteur (32) de cristallisation peut communiquer avec un accumulateur de dioxyde de carbone, qui fait partie d'une installation de séparation du dioxyde de carbone intégrée dans la centrale électrique à combustible fossile, de manière à pouvoir envoyer du dioxyde de carbone au réacteur de cristallisation.

16. Installation (30) suivant l'une des revendications 10 à 15, **caractérisée en ce que** le dissolveur (36) peut, pour faire sortir un solvant traité, communiquer, par un conduit (52) de recyclage, avec une unité de désorption de l'installation de séparation du dioxyde de carbone.
